# FASCICULE DE BREVET EUROPEEN

(11) **EP 0 866 531 B1**
(45) Date de publication et mention de la délivrance du brevet: **23.01.2002**
(21) Numéro de dépôt: 98410029.7
(22) Date de dépôt: 19.03.1998
(51) Int. Cl.: H02B 1/01

(54) **Châssis métallique à coin d'assemblage hyperstatique, notamment pour une ossature d'armoire électrique**
Redundante Eckverbindung für Metallrahmen, insbesondere für ein Rahmengestell eines Schaltschrankes
Redundant corner connection for a metal support, especially for a frame for an electric cabinet

(30) Priorité: 21.03.1997 FR 9703720
(43) Date de publication de la demande: 23.09.1998
(73) Titulaire: Schneider Electric Industries SA, 92100 Boulogne Billancourt (FR)
(72) Inventeur: Laboch, Kazimir, 38050 Grenoble cedex 09 (FR); Pin, Jean-Pierre, 38050 Grenoble cedex 09 (FR)
(74) Mandataire: Ritzenthaler, Jacques

(56) Documents cités:
- DE-A- 2 746 545
- DE-A- 19 622 735
- DE-U- 8 501 810

## Description

L'invention est relative à un châssis métallique, notamment pour une armoire électrique, comprenant:
- des montants verticaux en forme de piliers à base de profilés en U,
- une première série de traverses horizontales s'étendant parallèlement entre elles dans la direction de la largeur de l'armoire,
- une deuxième série de traverses perpendiculaires aux traverses de la première série, et s'étendant dans la direction de la profondeur de l'armoire,
- et des moyens de fixation pour assembler lesdites traverses des deux séries aux montants de manière à constituer une ossature à profil de parallélogramme rectangle.
voir DE 27 46 545 A.

Le montage d'une ossature métallique d'armoire électrique nécessite généralement un nombre important de pièces d'assemblage et de fixation pour conférer à l'ossature une rigidité mécanique suffisante. La structure des montants et des traverses présente d'autre part des formes spécifiques complexes. Il en résulte des temps de montage relativement longs, et des coûts de fabrication importants. La conception d'une telle ossature ne facilite pas le câblage à la partie haute ou à la partie basse de la cellule.

L'objet de l'invention consiste à réaliser une ossature d'armoire électrique à montage et à raccordement simplifiés, et ayant une rigidité mécanique élevée.

Le châssis métallique selon l'invention est caractérisé en ce que chaque montant est pourvu d'un moyen de support équipé de quatre surfaces d'appui destinées à coopérer avec deux surfaces de positionnement de formes conjuguées d'une traverse de la première série pour former un dispositif de fixation à coin hyperstatique lors du serrage des moyens de fixation.

Selon un premier mode de réalisation de l'invention, les moyens de fixation comportent une vis centrale traversant un trou de la traverse correspondante, et coopérant avec un écrou de blocage solidaire du moyen de support, ledit écrou possédant un trou taraudé disposé au centre de symétrie des quatre surfaces d'appui dudit logement.

Selon un deuxième mode de réalisation, le moyen de support est formé par un logement découpé dans chaque montant. L'écrou de blocage est introduit à l'intérieur du U du montant au niveau du logement. Le logement de chaque montant en U est délimité par deux arêtes horizontales et parallèles ménagées dans l'âme commune, et deux découpes identiques agencées dans les deux branches et supportant lesdites surfaces d'appui.

Selon un troisième mode de réalisation, le moyen de support du dispositif de fixation à coin hyperstatique est constitué par une pièce de liaison solidarisée au montant et à la traverse de la deuxième série par des moyens d'assemblage, ladite pièce comprenant quatre surfaces d'appui, et une entretoise centrale munie d'un trou pour le passage des moyens de fixation.

A la partie inférieure de l'ossature, il est facile d'intégrer un socle, ainsi qu'un système de mise à niveau sur le site, associé à un dispositif de fixation de l'ossature au sol.

D'autres avantages ressortiront plus clairement de la description qui va suivre de différents modes de réalisation donnés à titre d'exemples non limitatifs, et représentés aux dessins annexés, dans lesquels:
- la figure 1 est une vue en perspective de l'ossature selon l'invention;
- la figure 2A montre une vue éclatée en perspective du système d'assemblage d'un montant aux traverses inférieures;
- la figure 2B est une vue identique de la figure 2A en position montée du système d'assemblage;
- la figure 3 représente une vue identique de la figure 2B pour le système d'assemblage d'un montant aux traverses supérieures;
- la figure 4A est une vue identique de la figure 2A d'une variante de réalisation;
- la figure 4B montre une vue éclatée en perspective d'une variante d'assemblage d'un montant aux traverses supérieures;
- la figure 5 est une vue éclatée en perspective d'une autre variante de réalisation;
- la figure 6 montre le dispositif d'assemblage de la figure 5 en position montée.

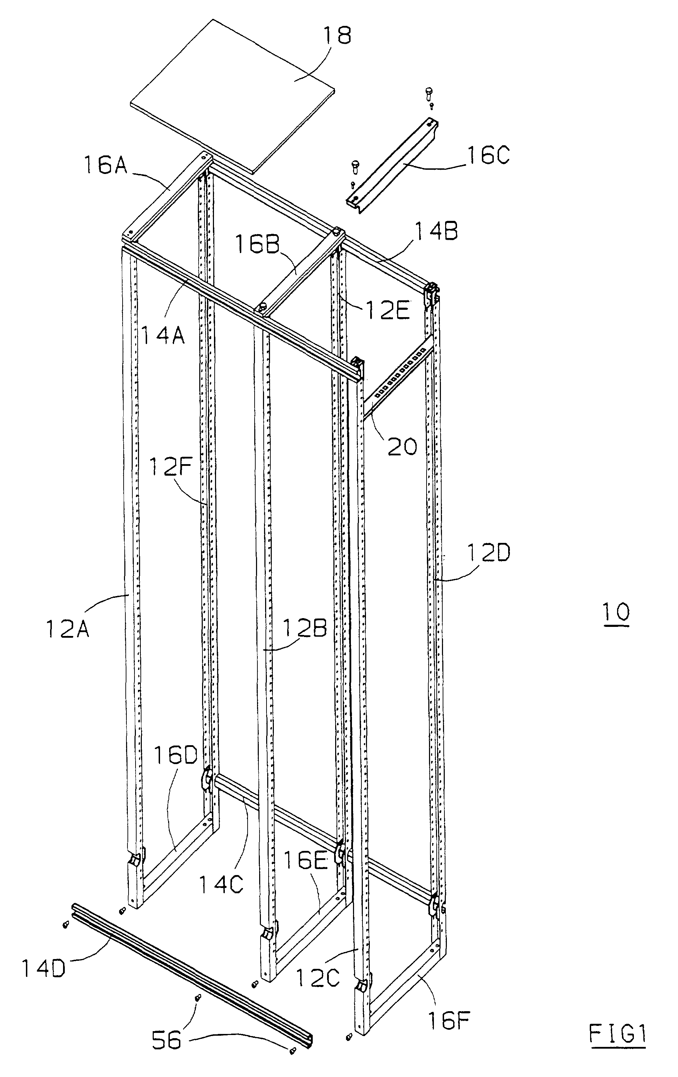

En référence à la figure 1, un châssis 10 métallique d'une armoire électrique est formé par l'assemblage de montants 12A, 12B, 12C, 12E, 12F, verticaux en forme de profilés en U, et de deux séries de traverses 14A, 14B, 14C, 14D; 16A, 16B, 16C, 16D, 16E, 16F, perpendiculaires disposées dans deux plans horizontaux, de manière à délimiter une ossature à profil de parallélogramme rectangle. Les traverses horizontales 14A à 14D de la première série s'étendent parallèlement entre elles dans la direction de la largeur de l'armoire, tandis que les traverses 16A à 16F de la deuxième série sont perpendiculaires aux traverses 14A à 14E, et s'étendent dans la direction de la profondeur du châssis 10.

La face avant du châssis 10 est définie par les montants antérieurs 12A, 12B, 12C et les traverses 14A, 14D frontales. La face arrière du châssis 10 comprend les montants postérieurs 12F, 12E, 12D, et les traverses 14B, 14C. La zone d'assemblage des montants 12A-12F aux différentes traverses 14A-14E, 16A-16F se trouve à la partie supérieure du châssis 10, et au voisinage de la partie inférieure.

Une tôle d'obturation 18 peut être rapportée sur les traverses 16A, 16B, 16C supérieures pour constituer un toit plat. Une entretoise 20 de support d'un jeu de barres est agencée à faible distance sous la traverse 16C, en étant solidarisée entre les deux montants 12C, 12D. L'enlèvement de la traverse 16C facilite l'accès à l'entretoise 20, notamment lors d'un raccordement par des éclisses d'un jeu de barres additionnel d'une cellule adjacente.

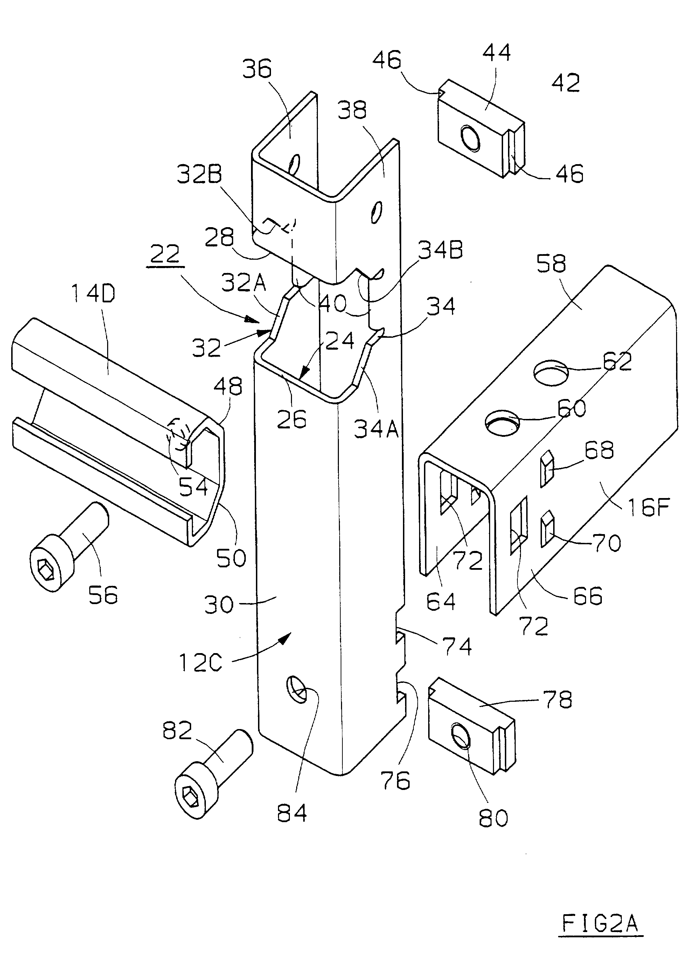

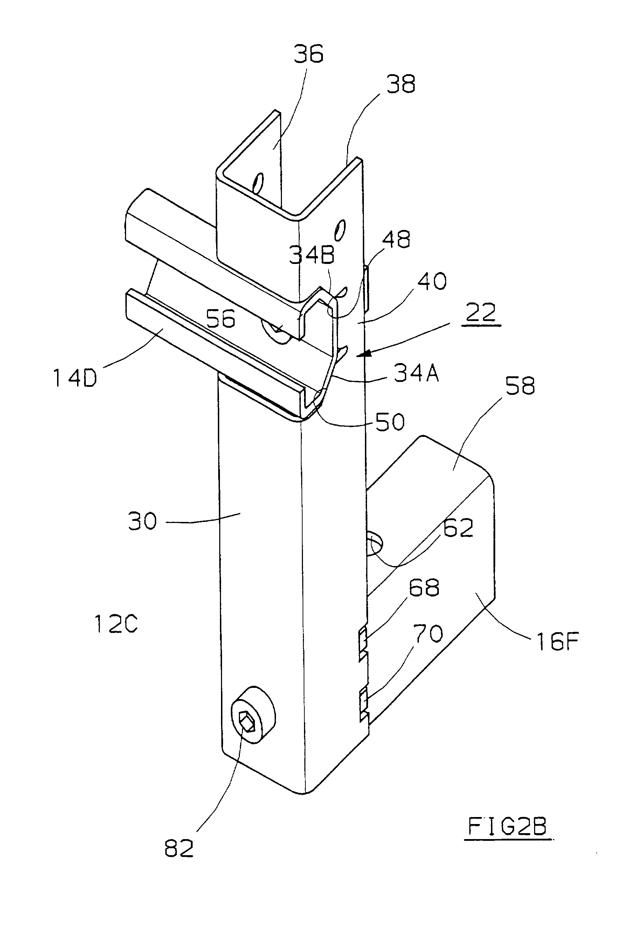

Sur les figures 2A et 2B, l'assemblage de la traverse horizontale 14D sur le montant 12C vertical s'effectue à la partie inférieure du châssis 10 au moyen d'un dispositif de fixation à coin hyperstatique, désigné par le repère général 22. Le montant 12C en U est pourvu d'un logement 24 délimité par deux arêtes 26, 28 horizontales et parallèles ménagées dans l'âme 30 commune, et par deux découpes 32, 34 identiques dans les deux branches 36, 38 en U. Chaque découpe 32, 34 comporte deux surfaces d'appui 32A, 32B; 34A, 34B au niveau de la branche correspondante 36, 38, lesquelles sont séparées l'une de l'autre par une languette 40 intermédiaire repliée de 180° vers l'intérieur.

Un écrou 42 de blocage à trou 44 taraudé est introduit à l'intérieur du U du montant 12C, et comprend deux épaulements 46 opposés venant en butée contre les extrémités des languettes 40 de manière à positionner le trou 44 de l'écrou 42 au centre de symétrie des quatre surfaces d'appui 32A, 32B; 34A, 34B du logement 22.

La traverse 14D horizontale est formée par un profilé en forme de C ou d'oméga, ayant deux surfaces de positionnement 48, 50 externes s'étendant dans la direction longitudinale, et destinées à venir en engagement contre les quatre surfaces d'appui 32A, 32B; 34A, 34B à l'intérieur du logement 24. La surface de positionnement 48 oblique possède une forme conjuguée à celle des surfaces d'appui 32B, 34B disposées au-dessus des deux languettes 40. Il en est de même de l'autre surface de positionnement 50 destinée à coopérer avec les deux surfaces d'appui 32A, 34A situées en-dessous des languettes intermédiaires 40. La surface médiane 52 du profilé de la traverse 14D est pourvue d'un trou 54 (en pointillé sur figure 2A) autorisant le passage d'une vis de fixation 56.

Pour assembler la traverse 14D au montant 12C, il suffit d'introduire l'écrou 42 par l'arrière du U en le bloquant contre les languettes 40, et de serrer ensuite la vis de fixation 56 après l'insertion de la traverse 14D dans le logement 24 (figure 2B). Il en résulte un assemblage à coin hyperstatique avec blocage de l'ensemble par une vis 56 unique garantissant une rigidité mécanique élevée grâce à la répartition uniforme de la pression de serrage sur les quatre surfaces d'appui 32A, 32B; 34A, 34B du logement 24.

L'assemblage de la traverse 14D sur les trois montants 12A, 12B, 12C nécessite trois vis de fixation 56.

La traverse 16F est constituée par un profilé en U renversé, ayant une âme 58 commune percée par deux orifices 60, 62, et deux ailes 64, 66 parallèles, équipée chacune de deux bossages 68, 70, et d'une lumière 72. L'écartement externe entre les deux ailes 64, 66 est legèrement inférieur à l'écartement entre les surfaces internes des branches 36, 38 du montant 12C, de manière à permettre l'insertion de la traverse 16F à l'intérieur du U du montant 12C jusqu'à la venue en butée des bossages 68, 70 contre les découpes 74, 76 pratiquées dans chaque branche 36, 38 du montant 12C. Un écrou de blocage 78 à trou 80 taraudé a été inséré au préalable dans les lumières 72 des deux ailes de la traverse 16F.

L'assemblage de la traverse 16F au montant 12C s'effectue au moyen d'une vis de fixation 82 accessible depuis l'avant du châssis 10 en traversant un trou 84 ménagé dans l'âme 30 du montant 12C, et en se vissant dans l'écrou de blocage 78.

La première lumière 60 de la traverse 16F permet le passage d'une vis de réglage (non représentée) faisant partie d'un système de mise à niveau sur le site. La fixation du châssis 10 au sol s'opère au moyen d'une vis de fixation (non représentée) traversant la deuxième lumière 62 de la traverse 16F inférieure.

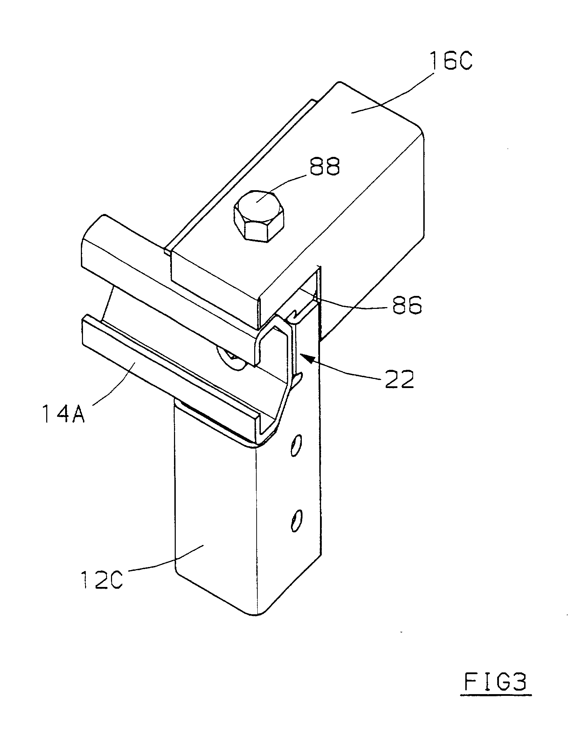

En référence à la figure 3, l'assemblage de la traverse horizontale 14A à la partie supérieure du montant 12C intervient au moyen d'un dispositif de fixation à coin hyperstatique 22 du même type que celui décrit en référence aux figures 2A et 2B. La structure de la traverse supérieure 14A est identique à celle de la traverse inférieure 14D. L'extrémité de la traverse de profondeur 16C comporte un épaulement 86 recouvrant le sommet du montant 12C, et une partie terminale de la traverse horizontale 14A. L'assemblage de la traverse 16C sur le montant 12C s'effectue au moyen d'une vis de fixation 88 destinée à être vissée dans un écrou prisonnier du montant 12C.

La forme du profilé constitutif des traverses horizontales 14A, 14B, 14C, 14D peut être quelconque, à condition de posséder à l'arrière deux surfaces de positionnement.

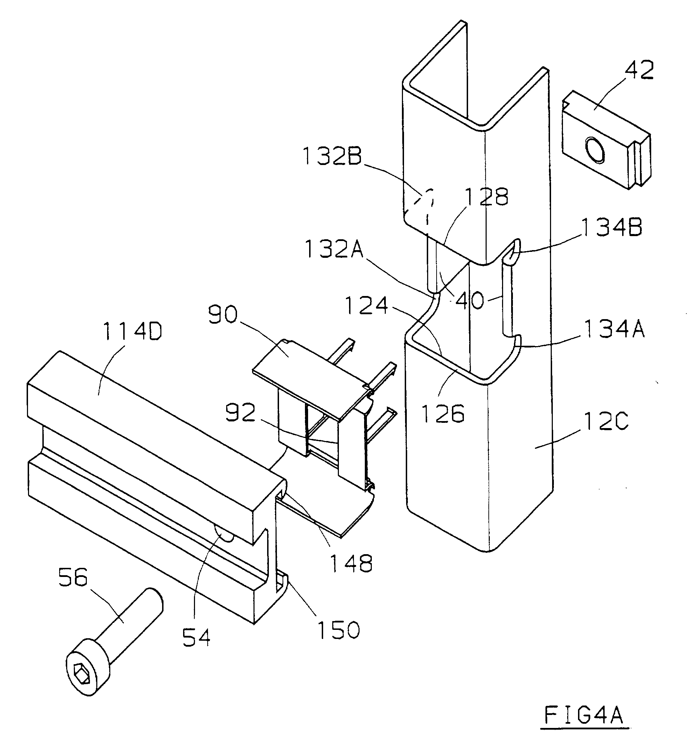

Dans la figure 4A, la traverse 114D est en forme de H ayant à sa partie arrière deux surfaces de positionnement 148, 150 continues, destinées à coopérer avec quatre surfaces d'appui 132A, 132B, 134B, 134A lors de l'insertion dans le logement 124 du montant 12C. Un écrou de blocage 42, comparable à celui de la figure 2A, est inséré dans le profilé en U du montant 12C pour permettre l'assemblage par la vis de fixation 82. Un point d'étanchéité 90, en matière élastomère moulée, est intercalé entre les surfaces de positionnement 148, 150 de la traverse 114D, et les surfaces d'appui 132A, 132B, 134A, 134B du montant 12C en épousant la forme du logement 124. Le serrage de l'ensemble par la vis de fixation 82 unique constitue un assemblage étanche à coin hyperstatique.

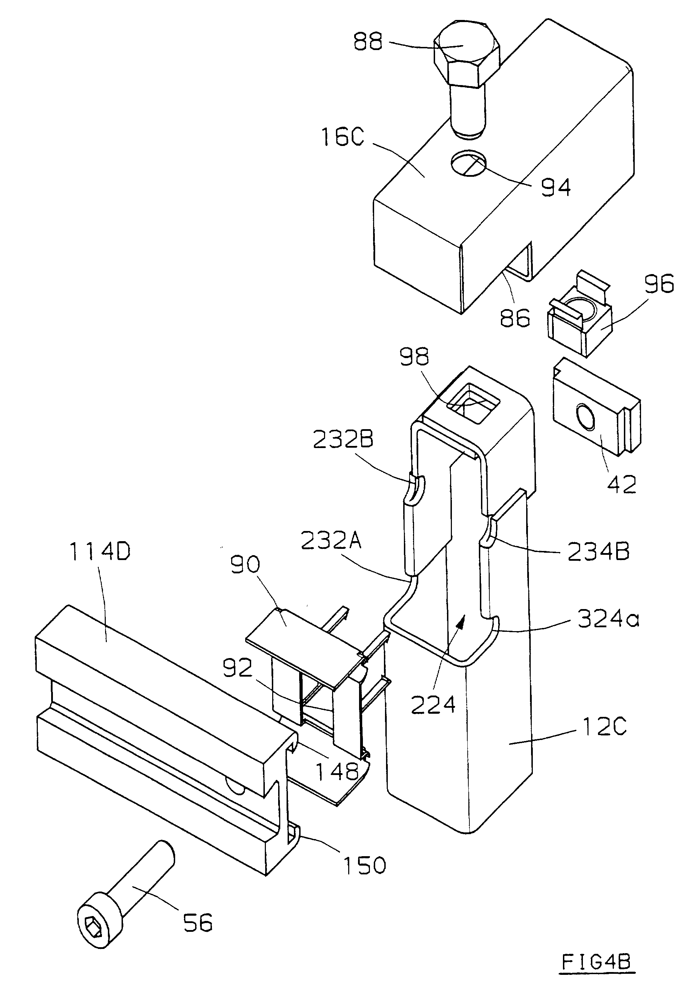

Sur la figure 4B, la même traverse 114D de structure identique à celle de la figure 4A, est utilisée pour la partie supérieure de l'assemblage. Les quatre surfaces d'appui 232A, 232B, 234A 234B du logement 224 agencées dans le montant 12C, ont des formes conjuguées à celles des surfaces de positionnement 148, 150 de la traverse 114D, et le joint 90 possède un trou 92 central pour le passage de la vis 92. La fixation de la traverse 16C sur le montant 12C s'effectue au moyen de la vis 88 traversant un trou 94 de la traverse 16C, et vissée dans un écrou 96 à pinces prisonnier d'un orifice 98 du montant 12C.

L'emploi des dispositifs de fixation à coin hyperstatique 22 pour l'assemblage des différentes traverses 14A-14D; 16A-16F aux montants 12A-12F correspondants permet de réduire le temps de montage du châssis 10, tout en augmentant la rigidité mécanique de la structure. Il est également possible dans le plan de raccordement de la cellule sur le site, d'enlever temporairement certaines traverses pour faciliter le câblage, et les interventions de maintenance. Un tel démontage temporaire est valable aussi bien pour les passages de câbles en haut ou en bas de la cellule.

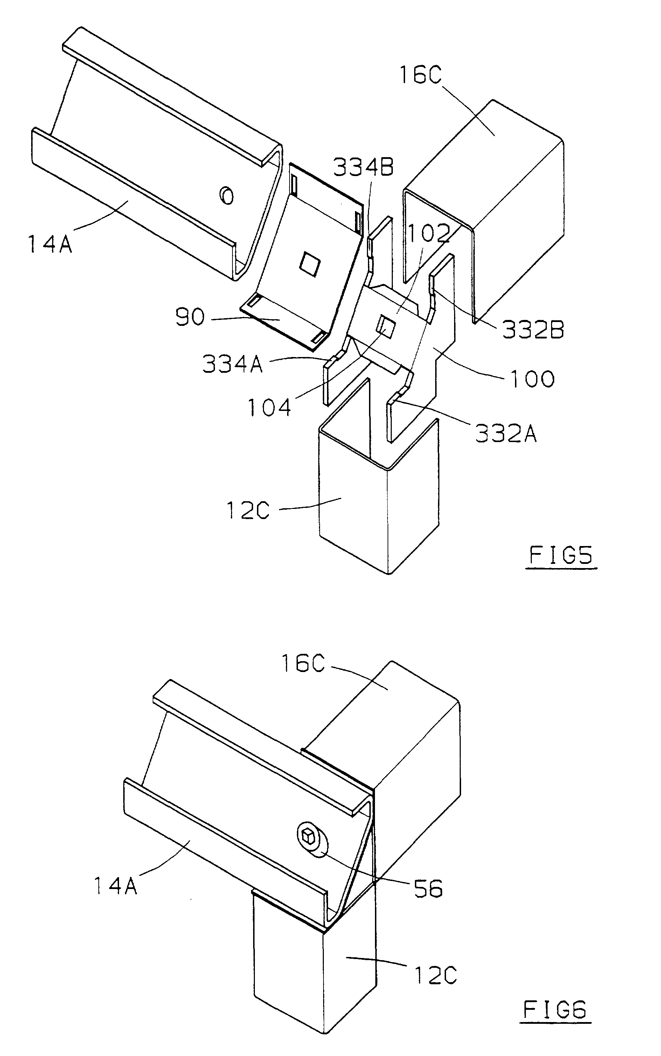

En référence aux figures 5 et 6, le dispositif de fixation à coin hyperstatique peut également être réalisé au moyen d'une pièce de liaison 100 solidarisée au montant 12C et à la traverse 16C par des moyens d'assemblage, notamment par soudage, rivetage ou agrafage. La pièce de liaison 100 est dotée de quatre surfaces d'appui 332A, 332B, 334A 334B, et d'une entretoise centrale 102 inclinée possédant un trou 104 pour le passage de la vis de fixation 56. Le joint 90 est intercalé entre la pièce de liaison 100 et la traverse 14A longitudinale. L'emploi de cette pièce de liaison 100 permet d'utiliser des montants 12A-12F et des traverses 16A-16F en U du commerce.

## Revendications

1. Châssis métallique, notamment pour une armoire électrique, comprenant:
- des montants (12A, 12B, 12C, 12E, 12F) verticaux en forme de piliers à base de profilés en U,
- une première série de traverses (14A, 14B, 14C, 14D) horizontales s'étendant parallèlement entre elles dans la direction de la largeur de l'armoire,
- une deuxième série de traverses (16A, 16B, 16C, 16D, 16E, 16F) perpendiculaires aux traverses (14A-14D) de la première série, et s'étendant dans la direction de la profondeur de l'armoire,
- et des moyens de fixation pour assembler lesdites traverses des deux séries aux montants (12A-12F) de manière à constituer une ossature à profil de parallélogramme rectangle,
**caractérisé en ce que** chaque montant (12A-12F) est pourvu d'un moyen de support équipé de quatre surfaces d'appui (32A, 32B; 34A, 34B; 132A, 132B; 134A, 134B; 232A, 232B; 234A, 234B; 332A, 332B; 334A, 334B) destinées à coopérer avec deux surfaces de positionnement (48, 50; 148, 150) de formes conjuguées d'une traverse (14A-14D) de la première série pour former un dispositif de fixation à coin hyperstatique (22) lors du serrage des moyens de fixation.

2. Châssis métallique pour une armoire électrique selon la revendication 1 **caractérisé en ce que** les moyens de fixation comportent une vis (56) centrale traversant un trou (54) de la traverse correspondante (14A-14D), et coopérant avec un écrou de blocage (42) solidaire du moyen de support, ledit écrou (42) possédant un trou (44) taraudé disposé au centre de symétrie des quatre surfaces d'appui (32A, 32B; 34A, 34B; 132A, 132B; 134A, 134B; 232A, 232B; 234A, 234B) dudit logement.

3. Châssis métallique pour une armoire électrique selon la revendication 1, **caractérisé en ce que** le moyen de support est formé par un logement (24, 124, 224) découpé dans chaque montant (12A-12F).

4. Châssis métallique pour une armoire électrique selon la revendication 2 ou 3, **caractérisé en ce que** les quatre surfaces d'appui sont obliques (32A, 32B; 34A, 34B) ou incurvées (132A, 132B; 134A, 134B; 232A, 232B; 234A, 234B).

5. Châssis métallique pour une armoire électrique selon la revendication 3, **caractérisé en ce que** l'écrou de blocage (42) est introduit à l'intérieur du U du montant (12A-12F) au niveau du logement (24, 124, 224).

6. Châssis métallique pour une armoire électrique selon la revendication 3 ou 5, **caractérisé en ce que** le logement (24, 124) de chaque montant en U est délimité par deux arêtes (26, 28; 126, 128) horizontales et parallèles ménagées dans l'âme (30) commune, et deux découpes (32, 34) identiques agencées dans les deux branches (36, 38) et supportant lesdites surfaces d'appui.

7. Châssis métallique pour une armoire électrique selon l'une des revendications 1 à 4, **caractérisé en ce qu'**un joint d'étanchéité (90) adapté à la forme du logement (124) est intercalé entre les surfaces de positionnement (148, 150), et lesdites surfaces d'appui pour obtenir un assemblage étanche à coin hyperstatique.

8. Châssis métallique pour une armoire électrique selon la revendication 1 ou 2, **caractérisé en ce que** le moyen de support du dispositif de fixation à coin hyperstatique est constitué par une pièce de liaison (100) solidarisée au montant (12A-12F) et à la traverse (16A-16F) de la deuxième série par des moyens d'assemblage, ladite pièce comprenant quatre surfaces d'appui (332A, 332B; 334A, 334B), et une entretoise (102) centrale munie d'un trou (104) pour le passage des moyens de fixation.

9. Châssis métallique pour une armoire électrique selon l'une des revendications 1 à 8. **caractérisé en ce que** chaque traverse inférieure (16D, 16E, 16F) de la deuxième série est équipée d'une première lumière (60) pour le passage d'une vis de réglage d'un système de mise à niveau, et d'une deuxième lumière (62) pour le passage d'une vis de fixation du châssis (10) au sol.

10. Châssis métallique pour une armoire électrique selon l'une des revendications 1 à 9, **caractérisé en ce que** chaque traverse supérieure (16A, 16B, 16C) de la deuxième série comporte un épaulement (86) recouvrant le sommet du montant (12A-12F) correspondant, et une partie de la traverse (14A-14D) de la première série.

## Patentansprüche

1. Metallgestell, insbesondere für einen Schaltschrank, bestehend aus
- senkrechten Längsholmen (12A, 12B, 12C, 12E, 12F), die als aus U-Profilen bestehende Stützpfeiler ausgebildet sind,
- einer ersten Gruppe von waagerechten Traversen (14A, 14B, 14C, 14D), die in der Breitenebene des Schranks parallel zueinander angeordnet sind,
- einer zweiten Gruppe von Traversen (16A, 16B, 16C, 16D, 16E, 16F), die in der Tiefenebene des Schranks rechtwinklig zu den Traversen (14A-14D) der ersten Gruppe angeordnet sind,
sowie Befestigungsmitteln zur Verbindung der genannten Traversen der beiden Gruppen mit den Längsholmen (12A-12F), um ein Gerüst mit rechteckigem Profil zu bilden,
**dadurch gekennzeichnet, daß** jeder Längsholm (12A-12F) ein Stützmittel mit vier Auflageflächen (32A, 32B; 34A, 34B; 132A, 132B; 134A, 134B; 232A, 232B; 234A, 234B; 332A, 332B; 334A, 334B) aufweist, die dazu dienen, mit zwei entsprechend geformten Positionierflächen (48, 50; 148, 150) einer Traverse (14A-14D) der ersten Gruppe zusammenzuwirken, um beim Festspannen der Befestigungsmittel eine Befestigungsvorrichtung mit statisch unbestimmter Eckverbindung (22) zu bilden.

2. Metallgestell für einen Schaltschrank nach Anspruch 1, **dadurch gekennzeichnet, daß** die Befestigungsmittel eine Mittelschraube (56) umfassen, die eine in der zugeordneten Traverse (14A-14D) ausgebildete Bohrung (54) durchragt und mit einer fest mit dem Stützmittel verbundenen Spannmutter (42) zusammenwirkt, wobei die genannte Mutter (42) eine im Symmetriezentrum der vier Auflageflächen (32A, 32B; 34A, 34B; 132A, 132B; 134A, 134B; 232A, 232B; 234A, 234B) der genannten Aufnahme angeordnete Gewindebohrung (44) aufweist.

3. Metallgestell für einen Schaltschrank nach Anspruch 1, **dadurch gekennzeichnet, daß** das Stützmittel als in jeden Längsholm (12A-12F) eingestanzte Aufnahme (24, 124, 224) ausgebildet ist.

4. Metallgestell für einen Schaltschrank nach Anspruch 2 oder 3, **dadurch gekennzeichnet, daß** die vier Auflageflächen geneigt (32A, 32B; 34A, 34B) oder gekrümmt (132A, 132B; 134A, 134B; 232A, 232B; 234A, 234B) sind.

5. Metallgestell für einen Schaltschrank nach Anspruch 3, **dadurch gekennzeichnet, daß** die Spannmutter (42) in Höhe der Aufnahme (24, 124, 224) in das U-Profil des Längsholms (12A-12F) eingesetzt wird.

6. Metallgestell für einen Schaltschrank nach Anspruch 3 oder 5, **dadurch gekennzeichnet, daß** die Aufnahme (24, 124) jedes U-förmigen Längsholms durch zwei im gemeinsamen Mittelsteg (30) ausgebildete, parallel zueinander verlaufende waagerechte Kanten (26, 28; 126, 128) sowie durch zwei identische Ausnehmungen (32, 34) begrenzt wird, die in den beiden Seitenschenkeln (36, 38) ausgebildet sind und die genannten Auflageflächen umfassen.

7. Metallgestell für einen Schaltschrank nach einem der Ansprüche 1 bis 4, **dadurch gekennzeichnet, daß** zur Bildung einer dichten statisch unbestimmtem Eckverbindung zwischen die Positionierflächen (148, 150) und die genannten Auflageflächen eine an die Form der Aufnahme (124) angepaßte Dichtung (90) eingesetzt ist.

8. Metallgestell für einen Schaltschrank nach Anspruch 1 oder 2, **dadurch gekennzeichnet, daß** das Stützmittel der Befestigungsvorrichtung mit statisch unbestimmter Eckverbindung aus einem über Fügemittel fest mit dem Längsholm (12A-12F) und der Traverse (16A-16F) der zweiten Gruppe verbundenen Verbindungsteil (100) besteht, welches genannte Teil vier Auflageflächen (332A, 332B; 334A, 334B) sowie einen Mittelsteg (102) aufweist, in dem eine Öffnung (104) zur Durchführung der Befestigungsmittel ausgebildet ist.

9. Metallgestell für einen Schaltschrank nach einem der Ansprüche 1 bis 8, **dadurch gekennzeichnet, daß** jede untere Traverse (16D, 16E, 16F) der zweiten Gruppe eine erste Öffnung (60) zur Durchführung einer Stellschraube einer Nivelliervorrichtung sowie eine zweite Öffnung (62) zur Durchführung einer Befestigungsschraube zur Bodenverankerung des Gestells (10) aufweist.

10. Metallgestell für einen Schaltschrank nach einem der Ansprüche 1 bis 9, **dadurch gekennzeichnet, daß** jede obere Traverse (16A, 16B, 16C) der zweiten Gruppe eine Schulter (86) aufweist, welche die Stirnfläche des zugehörigen Längsholms (12A-12F) sowie einen Teilbereich der Traverse (14A-14D) der ersten Gruppe überdeckt.

## Claims

1. A metal frame, in particular for an electrical cabinet, comprising:
- vertical uprights (12A, 12B, 12C, 12D, 12E, 12F) in the form of U-shaped profiled section based pillars,
- a first series of horizontal cross-members (14A, 14B, 14C, 14D) extending parallel to one another in the widthwise direction of the cabinet,
- a second series of cross-members (16A, 16B, 16C, 16D, 16E, 16F) perpendicular to the cross-members (14A-14D) of the first series and extending in the depthwise direction of the cabinet,
- and fixing means to assemble said cross-members of the two series to the uprights (12A-12F) so as to constitute a framework with a rectangular profile,
**characterized in that** each upright (12A-12F) is provided with a support means equipped with four bearing surfaces (32A, 32B; 34A, 34B; 132A, 132B; 134A, 134B; 232A, 232B; 234A, 234B; 332A, 332B; 334A, 334B) designed to co-operate with two positioning surfaces (48, 50; 148, 150) of conjugate shapes of a cross-member (14A-14D) of the first series to form a fixing device with hyperstatic wedge (22) when the fixing means are securely tightened.

2. The metal frame for an electrical cabinet according to claim 1 **characterized in that** the fixing means comprise a central screw (56) passing through a hole (54) of the corresponding cross-member (14A-14D) and co-operating with a lock-nut (42) secured to the support means, said nut (42) having a tapped hole (44) arranged at the centre of symmetry of the four bearing surfaces (32A, 32B; 34A, 34B; 132A, 132B; 134A, 134B; 232A, 232B; 234A, 234B) of said housing.

3. The metal frame for an electrical cabinet according to claim 1 **characterized in that** the support means are formed by a housing (24, 124, 224) cut out in each upright (12A-12F).

4. The metal frame for an electrical cabinet according to claim 2 or 3 **characterized in that** the four bearing surfaces are oblique (32A, 32B; 34A, 34B) or curved (132A, 132B; 134A, 134B; 232A, 232B; 234A, 234B).

5. The metal frame for an electrical cabinet according to claim 3 **characterized in that** the lock-nut (42) is inserted inside the U of the upright (12A-12F) at the level of the housing (24, 124, 224)

6. The metal frame for an electrical cabinet according to claim 3 or 5 **characterized in that** the housing (24, 124) of each U-shaped upright is bounded by two parallel, horizontal edges (26, 28; 126, 128) arranged in the common body (30), and two identical cut-outs (32, 34) arranged in the two branches (36, 38) and supporting said bearing surfaces.

7. The metal frame for an electrical cabinet according to one of the claims 1 to 4 **characterized in that** a seal (90) suited to the shape of the housing (124) is inserted between the positioning surfaces (148, 150) and said bearing surfaces to obtain a tight assembly with a hyperstatic wedge.

8. The metal frame for an electrical cabinet according to claim 1 or 2 **characterized in that** the support means of the fixing device with hyperstatic wedge are formed by a joining part (100) fixedly secured to the upright (12A-12F) and to the cross-member (16A-16F) of the second series by assembly means, said part comprising four bearing surfaces (332A, 332B; 334A, 334B) and a central spacer (102) provided with a hole (104) for passage of the fixing means.

9. The metal frame for an electrical cabinet according to one of the claims 1 to 8 **characterized in that** each bottom cross-member (16D, 16E, 16F) of the second series is equipped with a first aperture (60) for passage of an adjustment screw of a levelling system, and with a second aperture (62) for passage of a screw for fixing the frame (10) to the ground.

10. The metal frame for an electrical cabinet according to one of the claims 1 to 9 **characterized in that** each top cross-member (16A, 16B, 16C) of the second series comprises a shoulder (86) covering the top of the corresponding upright (12A-12F) and a part of the cross-member (14A-14D) of the first series.
